# DEMANDE DE BREVET EUROPEEN

(11) **EP 2 221 750 A1**
(43) Date de publication de la demande: **25.08.2010**
(21) Numéro de dépôt: 09152487.6
(22) Date de dépôt: 10.02.2009
(51) Int. Cl.: G06K 19/077

(54) **Carte à puce à circuit de mesure à capteur, et procédé de réalisation de la carte à puce**

(71) Demandeur: EM Microelectronic-Marin SA, 2074 Marin (CH)
(72) Inventeur: Quercia, Victorio, 1586, Vallamand (CH); Willemin, Michel, 2515, Prêles (CH)
(74) Mandataire: Ravenel, Thierry Gérard Louis

(57) **Abrégé**

La carte à puce (1) comprend au moins un circuit intégré (11) muni d'une unité mémoire, dans laquelle peuvent être mémorisées des données personnelles et/ou au moins un code d'identification de la carte à puce et/ou des paramètres de configuration. Le circuit intégré est enfermé dans un matériau isolant (3) formant ladite carte. La carte à puce (1) comprend également des moyens de liaison (2) pour communiquer avec un instrument électronique. Ces moyens de liaison sont électriquement reliés à des plages correspondantes de contact du circuit intégré. La carte à puce comprend en outre un circuit de mesure à capteur pour la mesure d'un paramètre physique afin de pouvoir fournir au moins un signal de sortie relatif à la mesure (S_{D}) du paramètre physique. Le circuit de mesure à capteur est disposé dans un boîtier rigide pour définir un module électronique (10), qui est enfermé dans le matériau isolant (3) formant ladite carte à puce. Le circuit de mesure comprend un capteur de mouvement (C) pour détecter un choc ou pour mesurer une accélération, et une interface capteur reliée au capteur pour fournir un signal de mesure du paramètre physique. Le circuit de mesure est électriquement relié à travers le boîtier du module à des bornes de connexion externe sur le boîtier.

## Description

L'invention concerne une carte à puce munie d'un circuit de mesure à capteur. La carte à puce peut être une carte SIM, qui comprend au moins un circuit intégré muni d'une unité mémoire, dans laquelle peuvent être mémorisées des données personnelles et/ou au moins un code d'identification de la carte à puce et/ou des paramètres de configuration, et un circuit de mesure à capteur. Le circuit intégré et le circuit de mesure à capteur sont encapsulés dans un matériau isolant formant ladite carte. La carte à puce comprend aussi des moyens de liaison pour communiquer avec un instrument électronique dans lequel ladite carte à puce peut par exemple être placée. Ces moyens de liaison sont électriquement reliés à des plages correspondantes de contact du circuit intégré.

L'invention concerne également un procédé de réalisation d'une carte à puce munie d'un circuit de mesure à capteur.

Il faut entendre par moyens de liaison essentiellement tout moyen pour communiquer notamment des données et/ou des commandes avec un instrument électronique. Ces moyens de liaison peuvent être par exemple une zone de contacts électriques accessibles sur au moins une face de la carte à puce. Les contacts électriques de ladite zone de contacts sont destinés à venir en contact de bornes de contact complémentaires d'un instrument électronique dans lequel peut être placée ladite carte à puce.

La carte à puce peut être par exemple une carte SIM ou une carte mémoire ou une carte de crédit dans un format permettant leur placement dans un instrument électronique, qui peut être par exemple un téléphone portable (cellulaire). Dans le cas d'un instrument de télécommunication comme un téléphone portable, cette carte à puce peut être de préférence une carte SIM, qui est adaptée pour pouvoir être insérée dans un logement prévu à cet effet à l'intérieur dudit téléphone et connectée à des bornes de contact du téléphone. Dans un réseau cellulaire du type GSM, l'utilisation d'une telle carte à puce dans l'instrument électronique, notamment dans le téléphone portable, permet d'assurer l'identification d'un utilisateur par l'intermédiaire d'un opérateur du système de télécommunication. Cette carte à puce permet aussi d'assurer la compatibilité et l'interchangeabilité des téléphones portables au sein de ce système de télécommunication.

Ces cartes à puce permettent à l'utilisateur d'accéder au système de télécommunication mobile via un fournisseur ou opérateur de réseau approprié. Elles comprennent donc des données, qui définissent les modalités d'accès au système de télécommunication mobile et permettent en outre la mémorisation de données complémentaires relatives à l'utilisateur. Ces données complémentaires concernent par exemple un numéro d'identification personnel et/ou éventuellement un répertoire de numéros d'appels téléphoniques.

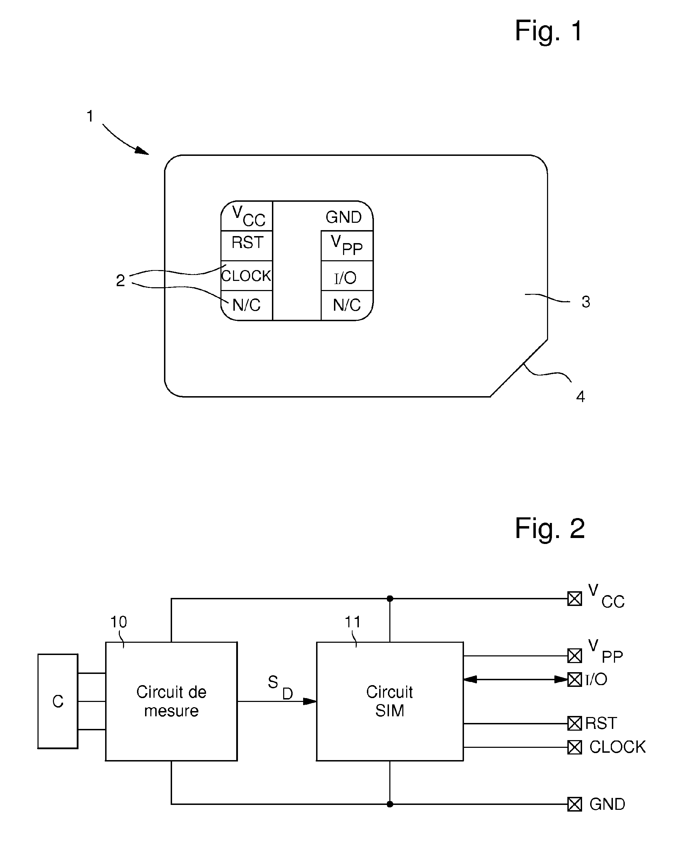

Chaque carte à puce du type SIM (Subscriber Identity Module) présente des dimensions et caractéristiques physiques qui sont définies par des standards internationaux, tels que notamment les standards ISO/IEC 7810, 7816-1 et 7816-2. Une telle carte à puce se présente ainsi sous la forme d'une carte en matière plastique dans laquelle est logée au moins un circuit intégré. Il existe deux formats standard d'une telle carte à puce pour équiper un instrument électronique portable. Le premier format est comparable à celui d'une carte de crédit (85.60 mm x 53.98 mm x 0.80 mm). Le deuxième format présente des dimensions plus petites de l'ordre de 25 mm x 15 mm x 0.80 mm, comme l'exemple illustré à la figure 1 et décrit dans la description suivante.

Il est également connu d'équiper une telle carte à puce du type SIM de moyens électroniques, telles qu'un dispositif RFID pour la communication bidirectionnelle de données au moyen d'une antenne du dispositif RFID, qui est logée dans la carte à puce. A ce titre, on peut citer le document de brevet US 2007/0281549, qui fait mention de cette fonction RFID en liaison au circuit intégré de ladite carte à puce. Cependant un tel dispositif RFID n'a que des fonctions similaires à celles liées à la téléphonie.

Une telle carte à puce peut également comprendre d'autres composants électroniques intégrés dans le matériau isolant de ladite carte à puce. Ces composants électroniques peuvent être des circuits de mesure à capteur tels que des circuits pour mesurer une température en liaison au circuit intégré de ladite carte à puce. Cependant aucune précaution n'est prise spécifiquement pour intégrer ces composants électroniques traditionnels avec le circuit intégré dans le matériau plastique de la carte.

L'invention a donc pour but de fournir une carte à puce qui comprend un circuit de mesure à capteur pour pallier notamment aux inconvénients susmentionnés, et permettant de ne pas nuire à la fonctionnalité du circuit de mesure intégré dans la carte.

A cet effet, l'invention concerne une carte à puce citée ci-devant, qui comprend les caractéristiques telles que définies dans la revendication indépendante 1.

Des formes d'exécution particulières de la carte à puce sont définies dans les revendications dépendantes 2 à 10.

Un avantage de la carte à puce, telle qu'une carte SIM, est qu'elle permet une fois insérée et connectée dans un instrument portable, tel qu'un téléphone portable, de fournir des signaux de données et/ou de commandes sur la base d'au moins une mesure effectuée par le circuit de mesure à capteur, qui comprend spécialement un capteur de mouvement.

Avantageusement le circuit de mesure, qui comprend le capteur de mouvement et une interface capteur, est monté dans un boîtier rigide pour définir un module électronique. Ceci permet d'assurer une meilleure isolation mécanique pour le capteur, qui peut être un capteur d'accélération du type MEMS. Ceci facilite le montage du module électronique à circuit de mesure dans la carte à puce sans contrainte par le matériau plastique notamment sur le capteur du circuit de mesure.

Avec un tel capteur de mouvement, tel qu'un capteur d'accélération ou de choc, une commande peut être fournie directement à l'instrument électronique portable ou par l'intermédiaire du circuit intégré de ladite carte. Cette commande relative au mouvement détecté peut permettre à l'instrument de reconnaître des actions ou fonctions à effectuer préprogrammées par l'utilisateur. Par exemple, il peut être envisagé d'exécuter une fonction spécifique dans l'instrument par une seule accélération ou secousse ou impulsion imposée à la carte à puce ou plusieurs secousses ou impulsions successives imposées à la carte à puce.

Avantageusement, il peut encore être envisagé avec un tel circuit de mesure à capteur de mouvement de fournir un signal numérique de sortie de mesure, qui peut être mémorisé dans un registre dédicacé de l'unité mémoire du circuit intégré. Ce signal de sortie peut permettre de commander l'instrument portable pour une reconnaissance de modèles, de menus, de mouvements du porteur de l'instrument, de chocs subis par l'instrument, ou pour tracer des dessins. Pour ce faire, le circuit de mesure à capteur peut être un accéléromètre ou podomètre utilisant une mesure d'une variation capacitive de condensateurs montés en différentiel d'un capteur capacitif. Cet accéléromètre peut être également un accéléromètre triaxial, qui permet de fournir des commandes à l'instrument portable, par exemple pour actionner à distance un engin mécanique, tel qu'un robot ou un véhicule.

Un avantage de ladite carte à puce montée dans l'instrument portable est que dans le cas où le capteur de mouvement est un accéléromètre, la mesure d'accélération permet de fournir une commande à l'instrument portable pour le passage par exemple d'un mode basse consommation ou stand-by à un mode de fonctionnement normal.

Dans le cas où la carte à puce est une carte SIM ou une carte mémoire, tous les paramètres liés au circuit de mesure, notamment des paramètres de configuration, peuvent être mémorisés. Ces paramètres de configuration peuvent être propres à l'utilisateur de ladite carte à puce. Ceci permet de changer d'instrument portable, tel que le téléphone portable, dans lequel est placée ladite carte à puce, tout en gardant mémorisés tous ces paramètres, et sans devoir à chaque fois opérer la configuration escomptée en cas de changement d'instrument. Ces paramètres peuvent être mémorisés dans une mémoire prévue directement dans le circuit de mesure ou dans l'unité mémoire du circuit intégré.

La carte à puce peut avantageusement comprendre ses propres moyens d'alimentation électrique. Ces moyens d'alimentation électrique peuvent comprendre une cellule solaire ou un accumulateur d'énergie ou un dispositif RFID pour capter des signaux radiofréquences.

A cet effet, l'invention concerne également un procédé de fabrication d'une carte à puce à circuit de mesure à capteur, qui comprend les caractéristiques telles que définies dans la revendication indépendante 11.

Des étapes particulières de réalisation de ladite carte à puce sont définies dans les revendications dépendantes 12 et 13.

Les buts, avantages et caractéristiques de la carte à puce, et de son procédé de fabrication apparaîtront mieux dans la description suivante de manière non limitative d'au moins une forme d'exécution illustrée par les dessins sur lesquels :
la figure 1 représente une vue de dessus d'une carte à puce sous la forme d'une carte SIM selon l'invention pour un téléphone portable,
la figure 2 représente de manière simplifiée les composants électroniques de la carte à puce selon l'invention, et
les figures 3a et 3b représente de manière simplifiée une vue de dessus et une vue de côté du circuit intégré et du circuit de mesure montés dans une partie de la carte à puce selon l'invention.

Dans la description suivante, toutes les parties de la carte à puce, qui sont bien connues d'un homme du métier dans ce domaine technique, ne sont relatées que de manière simplifiée.

La figure 1 représente une carte à puce ou carte intelligente (SMART card) sous la forme d'une carte SIM traditionnelle 1. Les caractéristiques principales de cette carte SIM 1, qui peut être utilisée dans un téléphone portable selon la présente invention sont ainsi sommairement décrites.

Cette carte SIM 1 se présente sous la forme d'un élément plat essentiellement rectangulaire possédant des dimensions par exemple de l'ordre de 15 mm x 25 mm, et d'épaisseur proche de 0.76 mm. Cette carte SIM 1 comporte en particulier un bord oblique 4 servant de détrompeur pour une bonne orientation de cette dernière, lorsqu'elle est insérée dans un logement prévu à cet effet dans le téléphone.

La carte SIM 1 comprend également des moyens de liaison 2 pour communiquer notamment des données et/ou des commandes avec un instrument électronique, tel qu'un téléphone portable dans lequel est placée ladite carte SIM. Ces moyens de liaison peuvent être de préférence une zone de contacts électriques accessibles 2, qui sont disposés sur au moins une face de ladite carte à puce. Les contacts électriques 2 sont représentés en nombre égal à huit, mais uniquement six de ces contacts sont généralement utilisés. Ces contacts électriques 2 sont reliés de manière traditionnelle à des plages de contact correspondantes d'un circuit intégré non représenté. Ce circuit intégré est ainsi enfermé dans le matériau opaque isolant 3 formant ladite carte à puce.

La zone de contacts électriques 2 est arrangée sur une face de la carte à puce selon des standards internationaux comme indiqués ci-devant. Une fois la carte à puce insérée dans le logement prévu d'un téléphone portable, les contacts électriques de la zone de contacts 2 sont connectés à des bornes de contact complémentaires prévues dans une position bien définie dans le téléphone. Une alimentation électrique peut être fournie par le téléphone à la carte par deux contacts électriques V_{CC} et GND de la zone de contacts 2. Il peut également être prévu un contact électrique RST pour recevoir éventuellement un signal de Reset, un contact électrique V_{PP} pour recevoir un signal de tension de programmation de l'unité mémoire, un contact électrique CLOCK pour recevoir ou fournir un signal d'horloge et un contact électrique I/O pour la réception ou le transfert de données ou de commandes.

Comme représenté schématiquement à la figure 2, ledit circuit intégré 11 pour une carte du type SIM comprend généralement une unité mémoire, non représentée, qui est reliée à une unité à microprocesseur, non représentée, pour le traitement de données ou commandes reçues ou transmises. L'unité mémoire peut comprendre une mémoire non volatile du type Flash ou EEPROM pour mémoriser des données personnelles, au moins un code d'identification de la carte à puce et des paramètres de configuration. L'unité mémoire contient également notamment des données définissant les modalités d'accès au système de télécommunication mobile.

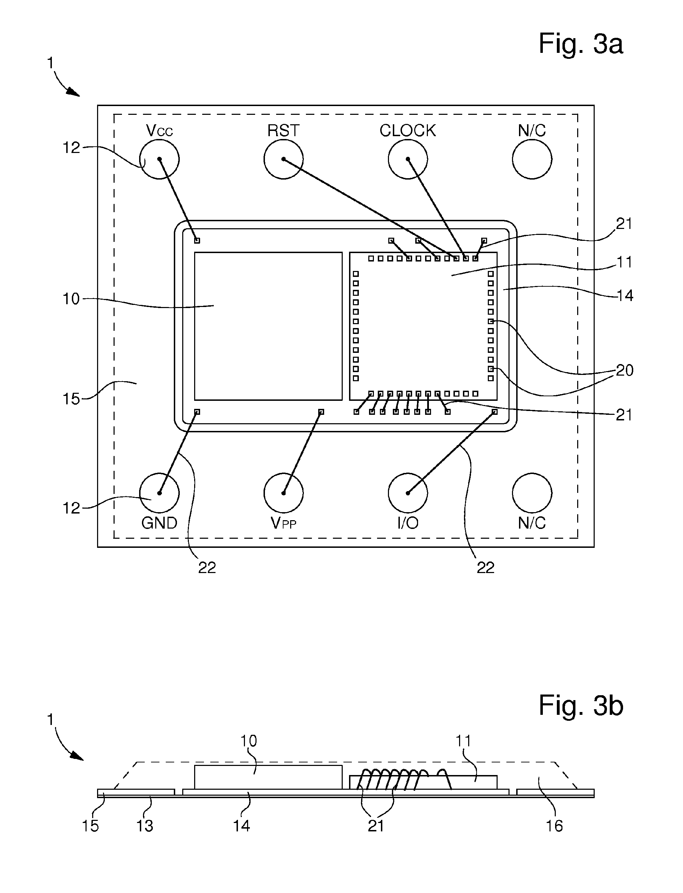

La carte à puce selon l'invention comprend encore un circuit de mesure 10 à capteur C. Comme expliqué ci-après en référence aux figures 3a et 3b, le circuit de mesure 10 à capteur C sont logés dans un boîtier rigide pour former un module électronique. Le circuit de mesure comprend donc une interface capteur 10 et un capteur de mouvement C du type MEMS, qui sont reliés sur une grille de connexion notamment en Cuivre à l'intérieur du boîtier rigide, qui peut être un boîtier du type MLF en plastique. Un espace suffisant est prévu à l'intérieur du boîtier pour le capteur de mouvement et l'interface capteur du circuit de mesure pour éviter toute contrainte du matériau d'encapsulation, qui enferme ledit module électronique 10. Le capteur de mouvement peut ainsi détecter sans problème un choc ou mesurer une accélération. Ce module électronique à circuit de mesure, qui est de préférence un accéléromètre à un seul axe ou triaxial, ou un podomètre, est enfermé également dans le matériau opaque isolant formant ladite carte à puce.

Il peut être envisagé d'utiliser un accéléromètre, qui comprend deux condensateurs montés en différentiel pour former un capteur capacitif dont la variation capacitive est mesurée par une interface capteur du circuit de mesure. L'interface capteur du circuit de mesure peut être réalisée par exemple sur la base d'une interface électronique telle que décrite notamment dans l'article rédigé par MM. H. Leutold et F. Rudolph, qui est paru dans la revue intitulée "Sensors and actuators" A21-A23 (1990), pages 278 à 281. Un accéléromètre piézo-résistif peut aussi être utilisé.

Cette interface capteur fournit un signal de mesure du paramètre physique (accélération) à des moyens de prétraitement du signal de mesure pour qu'ils fournissent un signal numérique de sortie S_{D} relatif à la mesure du paramètre. Ce signal de sortie peut être directement ou par l'intermédiaire du circuit intégré SIM 11, exploitable pour la commande d'une action ou d'une fonction d'un instrument portable, tel qu'un téléphone portable. Ceci permet d'opérer une commande rapide dans le téléphone.

Dans le cas de préférence d'un capteur de mouvement, pour la mesure d'une accélération ou d'un choc, une commande peut être fournie directement à l'instrument électronique portable ou par l'intermédiaire du circuit intégré de ladite carte. Cette commande relative au mouvement détecté peut permettre à l'instrument de reconnaître des actions ou fonctions à effectuer préprogrammées par l'utilisateur. Il peut être envisagé d'exécuter une fonction spécifique dans l'instrument par une seule secousse ou impulsion imposée à la carte à puce ou plusieurs impulsions successives imposées à la carte à puce dans un laps de temps défini.

Ce signal numérique de sortie S_{D} peut être mémorisé dans une mémoire du circuit de mesure ou de préférence dans un registre dédicacé de l'unité mémoire du circuit intégré SIM 11. La lecture de ce signal numérique mémorisé reste flexible dans le temps en fonction de l'utilisateur. Cette lecture dudit signal de sortie mémorisé peut être requise ainsi à tout moment. Cette unité mémoire peut également mémoriser des paramètres de configuration du circuit de mesure, notamment propres à un utilisateur de la carte à puce, et/ou différents signaux de sortie successifs du circuit de mesure. De cette manière, plusieurs données ou configurations personnelles sont mémorisées dans la mémoire du circuit de mesure 10 ou dans l'unité mémoire du circuit SIM 11. La carte à puce peut ainsi être placée dans n'importe quel autre instrument portable, c'est-à-dire dans n'importe quel autre téléphone portable sans devoir exécuter à nouveau toutes les opérations de programmation ou mémorisation de données ou commandes personnelles.

Le circuit de mesure à capteur peut comprendre à la suite de l'interface capteur, comme moyens de prétraitement encore une unité de traitement des signaux analogiques, un convertisseur analogique-numérique, une unité de commande et de traitement des signaux numériques, un oscillateur et un régulateur de tension régulée pour alimenter à une tension régulée les composants électroniques du circuit de mesure. Tous ces composants du circuit de mesure sont intégrés dans le module électronique. Le signal numérique de sortie S_{D} peut ainsi être fourni par l'unité de commande et de traitement de manière à pouvoir être mémorisé dans un registre dédicacé dans l'unité mémoire du circuit SIM. Un tel agencement de composants électroniques du circuit de mesure est notamment décrit dans la demande de brevet suisse CH 01431/07 du même Demandeur, qui est incorporé ici par référence.

Dans une forme d'exécution de la carte à puce, le circuit de mesure sans le capteur de mouvement est réalisé dans un second circuit intégré avec tous les composants électroniques indiqués ci-dessus. Ce second circuit intégré et le capteur de mouvement sont montés à l'intérieur du boîtier du module électronique, et reliés électriquement à des bornes de connexion externes du module électronique afin de pouvoir être reliés électriquement au premier circuit intégré de la carte à puce. Le premier circuit intégré et le module électronique peuvent être placés côté à côte dans le matériau isolant de la carte à puce. Le capteur MEMS, qui est relié électriquement à l'interface capteur du circuit de mesure, peut être monté sur le second circuit intégré ou placé dans un même plan que ce second circuit intégré dans le boîtier du module électronique.

Il peut encore être envisagé que la carte à puce comprenne encore de propres moyens d'alimentation électrique (mode stand-alone). Ces moyens d'alimentation électrique peuvent être constitués par une cellule solaire ou un accumulateur d'énergie électrique ou un dispositif RFID. Il peut être aussi prévu de monter plusieurs circuits intégrés dans la même carte à puce ou plusieurs circuits de mesure à capteur pour mesurer d'autres paramètres physiques, tels que la pression et/ou la température.

Aux figures 3a et 3b, il est représenté de manière simplifiée le circuit intégré SIM 11 et le module électronique 10 à circuit de mesure montés dans une partie de la carte à puce 1 selon l'invention.

Le module électronique 10 comme expliqué ci-dessus comprend dans un boîtier du type MLF classique notamment en plastique, un circuit de mesure à capteur de mouvement, qui est monté sur une grille de connexion en Cuivre. Le circuit de mesure est composé d'une interface capteur et du capteur de mouvement, qui définissent par exemple un accéléromètre à un seul axe ou triaxial, ou un podomètre. L'interface capteur fait partie d'un second circuit intégré dans lequel sont intégrés également des moyens de prétraitement du signal de mesure pour qu'ils fournissent un signal numérique de sortie S_{D} relatif à la mesure du paramètre. Ces moyens de prétraitement du signal de mesure comprennent une unité de traitement des signaux analogiques, un convertisseur analogique-numérique, une unité de commande et de traitement des signaux numériques, un oscillateur et un régulateur de tension régulée. Le circuit de mesure est relié électriquement à travers une paroi du boîtier du module, à des bornes de connexion externes non représentées, qui sont disposées sur une face extérieure du boîtier du module.

Le module électronique 10 est monté tout comme le premier circuit intégré SIM 11 sur une première face d'une plaque à circuit imprimé 14. Cette plaque à circuit imprimé peut être faite en FR4, en céramique ou en Silicium. Les bornes de connexion du module peuvent être connectées directement sur des plages de connexion prévues à cet effet sur la première face de la plaque 14. Pour ce faire, il peut être utilisé soit une technique dénommée "flip chip" en terminologie anglaise, soit une technique de brasage. Toutefois, il peut aussi être prévu de relier électriquement les bornes de connexion du module électronique sur la plaque à circuit imprimé au moyen de fils métalliques de connexion 21 sur des plages de connexion accessibles sur ladite plaque à circuit imprimé 14. Le circuit intégré SIM 11 comprend un ensemble de plages de contact 20, dont certaines sont reliées électriquement sur des plages de connexion de la plaque à circuit imprimé 14 par des fils métalliques 21. Ces fils métalliques peuvent être des fils en Or ou un Aluminium ou en Cuivre.

L'ensemble comprenant la plaque à circuit imprimé 14 sur laquelle sont montés le module électronique 10 et le circuit intégré SIM 11, est monté sur une première face d'un substrat de connexion 13, qui peut être un film flexible utilisé généralement dans des cartes à puce du type SIM. Ce film flexible peut être réalisé avec une résine époxy chargée de fibres de verre et portant des pistes conductrices métalliques faites en Or, en Cuivre et en Nickel.

Un cadre de connexion 15 entoure l'ensemble monté sur le substrat de connexion 13. Le cadre de connexion 15 fixé sur le substrat flexible 13 définit une alvéole pour le montage de l'ensemble, qui comprend la plaque à circuit imprimé 14 avec le module 10 et le circuit intégré 11. Il est prévu sur une première face de ce cadre de connexion 15, des plages de connexion 12 reliées à travers le cadre de connexion à des contacts électriques de la zone de contacts électriques accessibles de l'extérieur de la carte pour une connexion dans un instrument électronique. La zone de contacts électriques non représentée est disposée sur une seconde face du substrat de connexion 13 opposée à la première face de montage de l'ensemble.

Ces plages de connexion 12 du cadre de connexion sont au nombre de 8 pour être reliées à deux contacts électriques V_{CC} et GND de la zone de contacts, à un contact électrique RST pour recevoir un signal de Reset, à un contact électrique V_{PP} pour recevoir un signal de tension de programmation de l'unité mémoire, à un contact électrique CLOCK pour recevoir ou fournir un signal d'horloge et à un contact électrique I/O pour la réception ou le transfert de données ou de commandes. Excepté deux plages de connexion représentées par N/C, les plages de connexion 12 sont reliées par des fils métalliques 22 soit sur des plages de connexion de la plaque à circuit imprimé 14 ou directement sur des plages de contact 20 du circuit intégré SIM 11 comme représenté.

Pour une production industrielle, il est avantageux d'opérer déjà le montage du module électronique 10 et du circuit intégré SIM 11 sur la plaque à circuit imprimé 14. Ensuite de quoi cet ensemble est monté sur le substrat flexible 13 et une connexion électrique de cet ensemble avec les plages de connexion 12 du cadre de connexion 15 est opérée pour être compatible avec une production en grande série. Une fois que tous les composants électroniques sont montés et que leurs connexions électriques sont effectuées, tous ces éléments sont enfermés ou encapsulés d'une manière traditionnelle dans un matériau isolant 16 formant ladite carte à puce 1 d'épaisseur de l'ordre de 0.7 mm par exemple.

A partir de la description qui vient d'être faite, plusieurs variantes de réalisation de la carte à puce peuvent être conçues par l'homme du métier sans sortir du cadre de l'invention définie par les revendications. Dans le cas d'une carte à puce sous la forme d'une carte mémoire, la zone de contacts électriques peut se trouver sur un bord de ladite carte tout en ayant une partie des contacts électriques situés sur au moins une face principale de la carte. Les moyens de liaison de ladite carte à puce peuvent être également un dispositif de liaison sans fil, tel qu'un dispositif RFID ou un dispositif d'émission/réception de lumière. A l'intérieur du matériau opaque enfermant le ou les circuits intégrés, il peut être prévu un logement pour le capteur en fonction du type de paramètre physique à mesurer. Il aurait pu être prévu de réaliser le circuit de mesure dans le circuit intégré du circuit SIM, logé dans le module électronique, avec le capteur MEMS relié à l'interface capteur du circuit de mesure. Le capteur MEMS peut être monté sur le circuit intégré, qui comprend le circuit de mesure et le circuit SIM. Il peut être prévu également un capteur de température et/ou de pression dans la carte à puce fonctionnant alternativement avec le circuit de mesure à capteur de mouvement.

## Revendications

1. Carte à puce (1) qui comprend au moins un circuit intégré (11) muni d'une unité mémoire, dans laquelle peuvent être mémorisées des données personnelles et/ou au moins un code d'identification de la carte à puce et/ou des paramètres de configuration, ledit circuit intégré étant enfermé dans un matériau isolant (3) formant ladite carte, la carte (1) comprenant également des moyens de liaison (2) pour communiquer avec un instrument électronique, lesdits moyens de liaison étant électriquement reliés à des plages correspondantes de contact du circuit intégré, la carte à puce comprenant en outre un circuit de mesure à capteur pour la mesure d'un paramètre physique afin de pouvoir fournir au moins un signal de sortie relatif à la mesure (S_{D}) du paramètre physique, **caractérisé en ce que** le circuit de mesure à capteur est disposé dans un boîtier rigide pour définir un module électronique (10), qui est enfermé dans le matériau isolant (3) formant ladite carte à puce, et **en ce que** le circuit de mesure comprend un capteur de mouvement (C) pour détecter un choc ou pour mesurer une accélération, et une interface capteur reliée au capteur pour fournir un signal de mesure du paramètre physique, le circuit de mesure étant électriquement relié à travers le boîtier du module à des bornes de connexion externe sur le boîtier.

2. Carte à puce (1) selon la revendication 1, **caractérisé en ce que** le circuit de mesure dans le boîtier du module comprend également des moyens de prétraitement du signal de mesure fourni par l'interface capteur de manière que les moyens de prétraitement fournissent un signal de sortie (S_{D}) relatif à la mesure du paramètre et exploitable pour la commande d'une action ou d'une fonction d'un instrument électronique.

3. Carte à puce (1) selon la revendication 1, **caractérisée en ce que** les moyens de liaison comprennent un dispositif de liaison sans fil et/ou une zone de contacts électriques (2) accessibles sur au moins une face de la carte destinés à venir en contact de bornes de contact complémentaires d'un instrument électronique dans lequel peut être placée ladite carte à puce, lesdits contacts électriques étant électriquement reliés à des plages correspondantes de contact du circuit intégré, et **en ce que** le circuit de mesure à capteur (10) pour la mesure d'un paramètre physique peut fournir au moins un signal de sortie relatif à la mesure (S_{D}) du paramètre physique par une connexion électrique à travers le boîtier du module électronique et par l'intermédiaire du dispositif de liaison sans fil et/ou par un des contacts électriques (I/O) de la zone de contacts (2).

4. Carte à puce (1) selon la revendication 1, **caractérisée en ce que** le circuit de mesure à capteur est un accéléromètre triaxial, qui comprend un élément micro électro-mécanique, relié électriquement à une interface capteur du circuit de mesure.

5. Carte à puce (1) selon la revendication 1, **caractérisée en ce que** le boîtier du module électronique comprend intérieurement un espace suffisant pour le capteur de mouvement et l'interface capteur du circuit de mesure (10) afin de lui permettre de détecter un choc ou mesurer une accélération.

6. Carte à puce (1) selon la revendication 1, **caractérisée en ce que** la carte à puce est une carte SIM de manière à pouvoir être placée dans l'instrument électronique, qui est un téléphone portable, et **en ce que** l'interface capteur du circuit de mesure est prévue sur la base d'une seule ou plusieurs accélérations ou secousses successives de ladite carte à puce, pour fournir un signal pour commander l'exécution d'une action ou fonction préprogrammée dans l'instrument électronique.

7. Carte à puce (1) selon la revendication 1, **caractérisée en ce qu'**au moins un registre dédicacé dans l'unité mémoire du circuit intégré est prévu pour mémoriser le signal de sortie (S_{D}) relatif à la mesure du paramètre du circuit de mesure et fourni au circuit intégré à travers le boîtier du module électronique.

8. Carte à puce (1) selon l'une des revendications précédentes, **caractérisée en ce que** le circuit de mesure sans le capteur est réalisé dans un second circuit intégré et relié au capteur de mouvement dans le boîtier du module électronique, **en ce que** le module électronique est relié électriquement par ses bornes de connexion externe au premier circuit intégré de la carte à puce, le module électronique et le premier circuit intégré étant placés côté à côte dans le matériau isolant de la carte à puce sur une première face d'une plaque à circuit imprimé (14).

9. Carte à puce (1) selon la revendication 8, **caractérisée en ce qu'**une seconde face de la plaque à circuit imprimé (14) est montée sur une face intérieure d'un substrat de connexion (13), **en ce qu'**un cadre de connexion (15) est fixé sur la face intérieure du substrat de connexion et entoure la plaque à circuit imprimé (14), et **en ce que** la face extérieure du substrat de connexion porte une zone de contacts électriques (2) accessibles pour venir en contact de bornes de contact complémentaires d'un instrument électronique dans lequel peut être placée ladite carte à puce, la zone de contacts étant reliée électriquement au premier circuit intégré et au module électronique.

10. Carte à puce (1) selon l'une des revendications précédentes, **caractérisée en ce qu'**elle comprend des moyens d'alimentation électrique des composants de la carte à puce, telles qu'une cellule solaire ou un accumulateur d'énergie électrique ou un dispositif RFID pour capter des signaux radiofréquences.

11. Procédé de fabrication d'une carte à puce (1) selon l'une des revendications précédentes, **caractérisé en ce que** le procédé comprend les étapes consistant à :
- monter et relier électriquement le module électronique (10) muni à l'intérieur du boîtier du circuit de mesure à capteur de mouvement, et le circuit intégré (11) de la carte sur une première face d'une plaque à circuit imprimé (14), et
- encapsuler le module électronique (10) et le circuit intégré dans une couche de matériau isolant (16) formant ladite carte (1) tout en permettant à des moyens de liaison de la carte à puce, électriquement reliés au moins au circuit intégré, de pouvoir communiquer avec un instrument électronique.

12. Procédé de fabrication d'une carte à puce (11) selon la revendication 11, **caractérisé en ce qu'**avant l'opération d'encapsuler le module électronique (10) et le circuit intégré (11) dans le matériau isolant, une seconde face de la plaque à circuit imprimé (14) est fixée sur une face intérieure d'un substrat de connexion (13), dont une face extérieure comprend une zone de contacts électriques (2) accessibles pour venir en contact de bornes de contact complémentaires d'un instrument électronique.

13. Procédé de fabrication d'une carte à puce (11) selon la revendication 12, **caractérisé en ce qu'**il comprend avant ou après le montage du module électronique et du circuit intégré sur la première face de la plaque à circuit imprimé, les étapes de :
- fixer un cadre de connexion (15) sur la face intérieure du substrat de connexion flexible (13) de manière à définir une alvéole de réception de la plaque à circuit imprimé (14), et
- fixer la seconde face de la plaque à circuit imprimé (14) est fixée sur la face intérieure du substrat de connexion (13) à l'intérieur de l'alvéole définie par le cadre de connexion (15).
